# EUROPEAN PATENT APPLICATION

(11) **EP 4 640 311 A1**
(43) Date of publication of application: **29.10.2025**
(21) Application number: 24461564.7
(22) Date of filing: 28.04.2024
(51) Int. Cl.: B01J 35/39, B01J 23/83, B01J 21/06, B01D 53/86, B01J 37/02, B01J 37/04, B01J 37/08, C01B 32/50, C07C 27/12

(54) **CATALYST COMPOSITION FOR PHOTOCATALYTIC OXIDATION OF METHANE AND ITS USE**

(71) Applicant: UNIWERSYTET JAGIELLONSKI, 31-007 Kraków (PL)
(72) Inventor: Macyk, Wojciech, 32-060 Liszki (PL); Tabari, Taymaz, 30-392 Kraków (PL); Kobielusz, Marcin, 30-389 Kraków (PL); Sojka, Zbigniew, 31-419 Kraków (PL); Kuncewicz, Joanna, 30-011 Kraków (PL)
(74) Representative: Witek, Rafal

(57) **Abstract**

The invention relates to an improved method for the photocatalytic oxidation of methane to carbon dioxide under irradiation with light and at elevated temperature and to a catalyst that can be used in this method. The two-component catalyst comprises titanium dioxide and nickel oxide on ceria.

## Description

The invention relates to an improved method for the photocatalytic oxidation of methane and to a catalyst that can be used in this method.

The problem of methane oxidation from low-emission sources in the air is becoming more and more important in the context of reducing greenhouse gas emissions. Methane's global warming potential (GWP) is 25 times higher than that of carbon dioxide over a 100-year period. For this reason, the oxidation of methane from uncontrolled sources, such as mines and agricultural production, is becoming the subject of more and more intensive research. In a controlled manner, the oxidation of methane to CO₂ can be carried out using oxide catalysts, the operation of which requires significantly elevated temperatures, usually above 500°C, which results from the high activation energy of methane. On the other hand, photocatalytic oxidation of methane allows it to overcome the activation energy due to the high energy of the absorbed photons, but the efficiency of these reactions (so-called quantum yield) usually does not exceed a few per cent. In other words, photocatalysts are able to carry out this reaction at room temperature under illumination (raised temperature is not needed), however, the efficiency is markedly low, rendering the CH₄ conversion efficiency negligible when compared to conventional catalysts. These materials also do not show increased activity (similar to catalysts) at elevated temperatures.

The aim of the invention is to provide a catalyst that would allow efficient conduct of the photocatalytic methane oxidation reaction at a significantly reduced temperature. The specific aim of the invention is to achieve the possibility of carrying out this reaction with an efficiency of over 50% at a temperature close to 350°C.

Surprisingly, the above problem is solved by the present invention, which is defined in the appended claims.

The invention discloses a catalytic composition consisting of a thermal catalyst (CeO₂/NiO) and a photocatalyst (TiO₂), thanks to which the full conversion of methane into carbon dioxide takes place in the presence of light at temperatures lowered by 200-300°C compared to known catalytic processes, and the conversion quantum yield measured under such conditions reaches several thousand per cent. The observed effect significantly exceeds the sum of the independent effects of these factors (light, temperature). This surprising synergy effect can only be achieved with a catalytic composition containing a photocatalyst and a thermal catalyst at the same time. Disclosed catalytic composition can be used in the effective removal of methane from all the low-emission sources mentioned above.

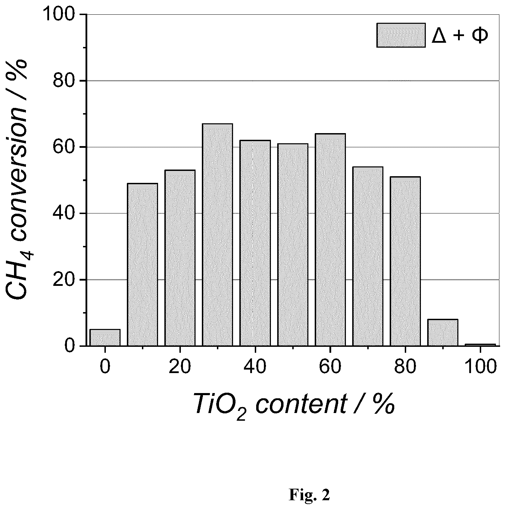

The disclosed catalytic composition comprises two components: a thermal catalyst and a photocatalyst. The thermal catalyst, when used alone, demonstrates activity above a specific temperature (achieving a conversion rate exceeding 50% at temperatures surpassing ca. 560°C). The presence of light does not influence its activity. The second component, a photocatalyst, is exclusively active in the presence of light. However, its activity is limited (up to a few per cent of CH₄ conversion), and any increase in temperature has a negligible effect on its performance. Separately at the temperature of 350°C and simultaneous illumination with UV light, both the thermal catalyst (CeO₂/NiO) and the photocatalyst (TiO₂) do not exhibit conversions above 50%, with specific values of 5% and below detection, respectively (Fig. 2).

Intriguingly, the catalytic composition comprising both components demonstrates unexpectedly high activity, surpassing what would be anticipated from the mere summation of their individual effects (synergy effect). The catalytic composition containing between 20 and 80% of photocatalyst allowed for conversions above 50%.

It is crucial to highlight these properties of catalytic composition according to the invention distinguishing them from other thermal catalysts and photocatalysts used for methane removal. Known thermal catalysts exhibit efficient methane transformation only above a specific threshold temperature. Consequently, evaluating new catalysts typically involves specifying the temperature at which conversion occurs. Notably, the state of the art has not yet documented a significant reduction at this temperature to a significant extent for reactivity of the catalyst achieved through illumination. Additionally, there is no report of combining a thermal catalyst and a photocatalyst, resulting in a lowered temperature for efficient methane transformation due to illumination.

In contrast to thermal catalysts, photocatalysts enable conversion at room temperature in the presence of light. However, it is essential to acknowledge that this efficiency is minimal compared to that observed for thermal catalysts. In the known state of the art, no photocatalyst with activity comparable to traditional catalysts has been reported. Previously reported photocatalysts did not exhibit a substantial increase in activity due to heating. In other words, there have been no reports of photocatalyst-based systems demonstrating comparable performance to catalysts at a specific elevated temperature. Photocatalyst activity depends on light intensity rather than temperature. Therefore, the comparison of photocatalysts often involves the quantum efficiency parameter, which accounts for conversion efficiency normalised to the number of absorbed photons.

In state of the art, the highest recorded quantum efficiency for photocatalytic transformation reaches a few per cent. In contrary, this value for the catalytic composition according to the invention is at least several thousand per cent.

Example 1 (comparative). Methane conversion efficiency in different reaction conditions observed for various catalytic systems.

Different catalytic compositions consisting of two elements: one functioning as a photocatalyst and the other as a thermal catalyst have been tested in the methane conversion reaction. The catalytic compositions used in these experiments result from the careful selection of two material groups renowned for their photocatalytic and catalytic activities, as outlined below in the Table 1. The methane conversion activity was assessed for each catalyst material and their combinations under the conditions of illumination with a xenon lamp, temperature elevation to 280°C, and simultaneous exposure to light and heat. The observed synergistic effect, signifying a higher conversion efficiency under simultaneous irradiation and heating conditions compared to the cumulative effect of these activities (refer to Table 1), was only noted in catalytic compositions comprising a TiO₂ as photocatalyst and a CeO₂/NiO as a thermal catalyst. Among these systems, the one featuring titanium dioxide as the photocatalyst was chosen due to its exceptionally impressive activity.

**Table 1: Methane conversion efficiency (%) under heating (280°C), irradiation (light) at room temperature or simultaneous heating and irradiation (Heat + Light) for various materials**

| **Materials** | **Light** | **Heat** | **Heat** + **Light** |
|---|---|---|---|
| TiO₂ | 0 | 0 | 0 |
| TiO₂@RuOₓ | 0 | 0 | 0 |
| TiO₂@CeO₂/NiO | 0 | 5 | 5 |
| ZnO | 0 | 0 | 0 |
| ZnO/Ag₂O | 3 | 0 | 3 |
| ZnO@CeO₂/NiO | 0 | 5 | 13 |
| TiO₂@CuO | 0 | 0 | 0 |
| TiO₂@CoO | 0 | 0 | 0 |
| **TiO₂@CeO₂/NiO** | **0** | **5** | **78** |

### Example 2. Optimization of the catalytic composition according to the invention.

Catalytic composition according to the invention contains photocatalyst (i.e. TiO₂) and thermal catalyst (i.e. mixture of CeO₂/NiO).

Various commercial forms of titanium dioxide were tested, with P25, the commercial mixture of nanocrystalline anatase and rutile, exhibiting the highest activity in the tested application.

The CeO₂/NiO mixture used as a thermal catalyst was obtained by the impregnation method. First, nickel nitrate was dissolved in water and then added dropwise to the commercial CeO₂ powder while stirred constantly employing a mortar. The obtained paste was dried in an oven at 120°C and transferred to a muffle furnace. The heating rate was 10°C/min until reaching 700°C, and then the material was calcined at this temperature for 2 h.

The catalytic composition, according to the invention, TiO₂@CeO₂/NiO, was obtained by transferring CeO₂/NiO mixture (thermal catalyst) to a mortar and mixed with an aqueous suspension of TiO₂ (photocatalyst) in the appropriate TiO₂ content ranging from 10 to 90%. The mixture was ground, dried and transferred to a muffle furnace. The heating rate was 10°C/min until reaching 300°C and kept at this temperature for 4 h.

In the catalytic composition according to the invention (TiO₂@CeO₂/NiO), the optimal ratio between the photocatalyst (TiO₂) and the thermal catalyst (CeO₂/NiO) was verified experimentally.

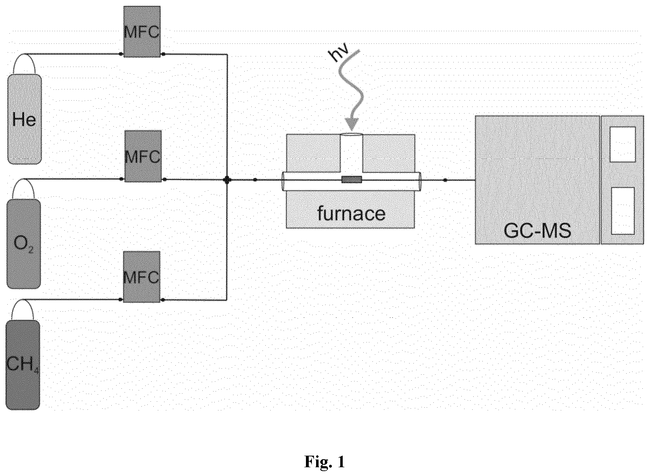

During the experiment, the reactor temperature was maintained at 350°C. The reactor's temperature was controlled by a furnace equipped with a fan, which automatically monitors the temperature to keep it constant to eliminate the heating effect of the light. The furnace has a quartz window (d = 3 cm) to irradiate the materials with a xenon lamp (XBO 150 W). The reactants, CH₄ and O₂, were mixed with inert gas (Ar) in the volume ratio of 4: 8: 88 v/v%, respectively. The flow rate of methane, oxygen, and helium was 0.5: 1: 11 cm³/min, which was controlled by employing mass flow controllers (MFC, Brooks), and the products were automatically taken from the reactor and studied with Gas Chromatography (GC-FID, Agilent). Each test used 200 mg of (photo)catalyst. The set-up of the methane oxidation is shown in Figure 1.

Figure 2 shows the influence of TiO₂ (photocatalyst) content on the photocatalytic (Φ) activity of the composites at 350°C (Δ).

As a result of the experiments carried out, it was determined that the TiO₂ content should preferably range from 10 to 80% by weight in the catalytic compositions according to the invention (TiO₂@CeO₂/NiO system).

Additionally, the optimisation of the catalyst composition, specifically the NiO content in CeO₂/NiO, has been performed.

The experimental methane oxidation reaction was carried out in the reactor (Fig. 1), where the temperature was controlled by a furnace. The catalyst (300 mg) was placed in the quartz tube (reactor) of a diameter of 2 cm. The furnace had a quartz window (d = 3 cm) through which the catalyst was irradiated with a xenon lamp. The reactants, CH₄ and O₂, were mixed with inert gas (Ar or He) in the volume ratio of 4:8:88 v/v%, respectively. The flow was controlled employing mass flow controllers (total flow rate of 20 ml/min), and the products were studied with GC-MS.

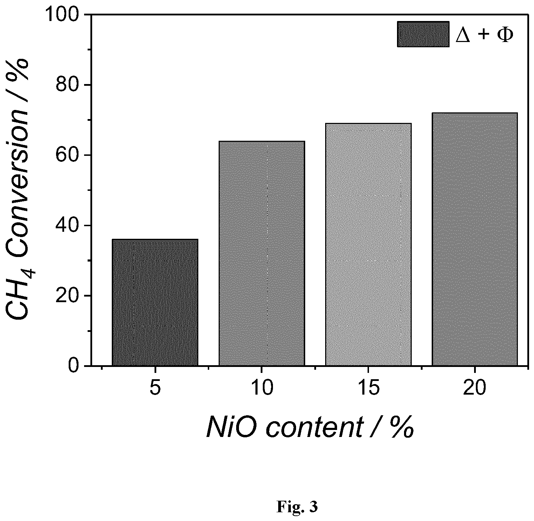

The influence of NiO content on the photocatalytic activity of the TiO₂@CeO₂/NiO composites at 350°C is presented in Fig. 3 for the reported system.

As a result of the experiments carried out, it was determined that the NiO content should preferably range from 10 to 20% by weight in the thermal catalyst according to the invention (TiO₂@CeO₂/NiO system).

### Example 3. Method for conversion of methane to carbon dioxide.

The methane oxidation reaction was carried out in the reactor as described in Example 2.

The experimental methane oxidation reaction in the presence of TiO₂@CeO₂/NiO composite was carried out in the reactor, where the temperature was gradually increased from room temperature to 700°C. Photocatalytic methane oxidation activity is observed from 150°C to 600°C. The catalyst (300 mg) was placed in the quartz tube (reactor) with a diameter of 2 cm. The furnace had a quartz window (d = 3 cm) through which the catalyst was irradiated with a xenon lamp. The reactants, CH₄ and O₂, were mixed with inert gas (Ar or He) and tested in various volume ratios with the oxygen concentration at up to 8% by volume and the methane concentration at up to 4%. The optimum ratio of CH₄ and O₂, mixed with Ar was 4:8:88 v/v%, respectively. The flow was controlled employing mass flow controllers (total flow rate of 20 ml/min), and the products were studied with GC-MS and GC-FID.

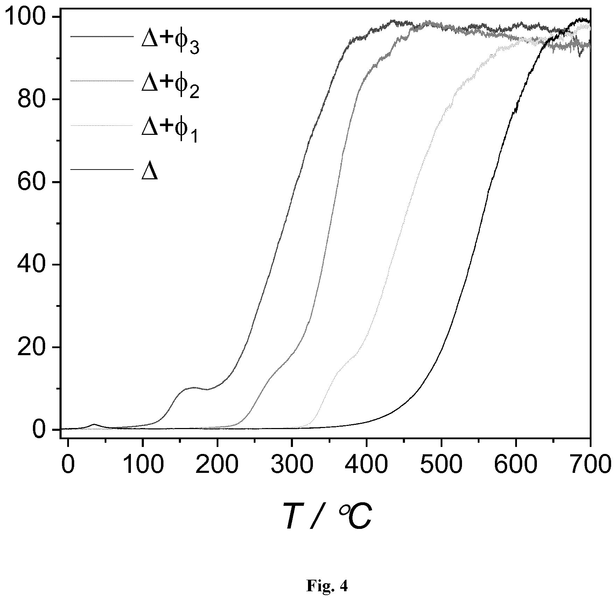

Figure 4 shows different variants of conversion of methane to carbon dioxide (in percent) in the presence of TiO₂@CeO₂/NiO: thermal (Δ) and photocatalytic (Δ+Φ) at different light intensities (Φ₁ (885 W/m²)< Φ₂ (1166.8 W/m²)< Φ₃(1531 W/ m²). Experimental conditions: flow reactor, the mixture of methane (4%) and oxygen (8%) in an inert gas (Ar); CO₂ detection - GC-MS.

### Conclusions:

The thermal catalyst for methane oxidation was the system of cerium and nickel oxides, CeO₂/NiO, which enables the complete conversion of CH₄ into CO₂ at temperatures above ~600°C. The photocatalyst cooperating with it was titanium dioxide, TiO₂, which at room temperature shows a negligible methane photoconversion efficiency (the efficiency increases only slightly after raising the temperature to 600°C).

Surprisingly, the activity of the catalyst composition TiO₂@CeO₂/NiO shows complete methane photoconversion already at temperatures close to 350°C, and a significant increase in conversion can be observed already at about 150°C. These temperatures depend on the light intensity (Fig. 4). It should be emphasised that, uniquely for the catalyst composition according to the invention, the light intensity required for achieving complete methane conversion is observed at a temperature as low as 350°C.

## Claims

1. Catalyst composition for photocatalytic oxidation of methane, **characterized in that** it contains a thermal catalyst and a photocatalyst enhancing its activity, wherein the thermal catalyst contains a mixture of CeO₂ and NiO and the photocatalyst contains TiO₂.

2. Catalyst composition according to claim 1, **characterized in that** the TiO₂ content is from 10 to 80% by weight of the catalyst composition.

3. Catalyst composition according to claim 1, **characterized in that** NiO content is from 10 to 20% by weight of said thermal catalyst.

4. Use of the catalyst composition as defined in claims 1-3 in photocatalytic oxidation of methane.

5. A method of photocatalytic oxidation of methane, **characterized in that** the gas mixture containing methane is contacted with oxygen in the presence of catalyst composition defined in claims 1-3, and the oxidation reaction is carried out in the presence of light.

6. The method according to claim 5, **characterized in that** the reaction is carried out at a temperature from 150°C to 600°C, preferably 350°C.

7. The method according to claim 5, **characterized in that** the reaction is carried out at a light intensity from 885 W/m² to 1531 W/m².

8. The method according to claim 5, **characterized in that** the oxygen content in the reaction mixture is up to 8 vol%.

9. The method according to claim 5, **characterized in that** the methane content in the reaction mixture is up to 4%.

10. The method according to claim 5, **characterized in that** the reaction is carried out in an atmosphere of inert gas, preferably argon.
